Europäisches Patentamt

European Patent Office

Office européen des brevets

(19)

(11) EP 0 583 202 B1

(12) FASCICULE DE BREVET EUROPEEN

(45) Date de publication et mention
de la délivrance du brevet:
**21.01.1998 Bulletin 1998/04**

(51) Int Cl.⁶: **H04N 7/167**

(21) Numéro de dépôt: **93402043.9**

(22) Date de dépôt: **11.08.1993**

(54) **Procédés de diffusion et de réception de programmes à accès conditionnel à temps de commutation de programmes réduit**

Verfahren zur Aussendung und Empfang von Programmen mit bedingtem Zugang mit verringerter Programmschaltzeit

Methods for broadcasting and receiving of conditional access programs with reduced program switching times

(84) Etats contractants désignés:
**DE GB SE**

(30) Priorité: **13.08.1992 FR 9210002**

(43) Date de publication de la demande:
**16.02.1994 Bulletin 1994/07**

(73) Titulaires:
• **FRANCE TELECOM**
**75015 Paris (FR)**
• **TELEDIFFUSION DE FRANCE**
**75015 Paris (FR)**

(72) Inventeurs:
• **Coutrot, Françoise**
**F-35510 Cesson Sevigne (FR)**
• **Giachetti, Jean-Luc**
**F-35000 Rennes (FR)**

(74) Mandataire: **Signore, Robert et al**
**c/o BREVATOME**
**25, rue de Ponthieu**
**75008 Paris (FR)**

(56) Documents cités:
**EP-A- 0 161 913           EP-A- 0 426 923**

• **G. T. WATERS 'Spécifications des systèmes de la famille Mac/Packets' 1986 , UNION EUROPéENNE DE DIFFUSION , BRUSSEL * page 221, ligne 1 - page 223, ligne 26 ***
• **IEEE TRANSACTIONS ON CONSUMER ELECTRONICS vol. 37, no. 3 , Août 1991 , NEW YORK US pages 441 - 448 KINGHORN 'New multipage teletext decoders'**

## Description

### Domaine technique

La présente invention a pour objet un procédé de diffusion et un procédé de réception de programmes à accès conditionnel et à temps de commutation de programmes réduit.

L'invention peut être mise en oeuvre soit au niveau de l'émission, soit au niveau de la réception pour des programmes ayant été émis selon le procédé d'émission, soit à la fois en émission et en réception. L'invention s'applique à la télévision, à la radio, à la messagerie, à la transmission de données, etc...

### Etat de la technique antérieure

Un procédé d'émission et de réception de programmes à accès conditionnel remplit schématiquement trois fonctions principales :

a) La première est une fonction d'embrouillage/désembrouillage. L'embrouillage peut intervenir indépendamment ou simultanément sur le son, l'image, les messages, les données, etc... afin de rendre ces composantes inintelligibles. Le désembrouillage est possible par le récepteur si celui-ci dispose d'un paramètre secret appelé mot de contrôle.

b) La deuxième est une fonction de contrôle, consistant à transmettre les conditions d'accès à un programme ou une composante, ainsi que les mots de contrôle permettant le désembrouillage pour les usagers autorisés. Ces informations sont envoyées dans des messages appelés "ECM" pour "Entitlement Control Message". Ces messages ECM sont synchronisés avec le programme et sont diffusés en même temps que lui. Par la suite, on appellera "canal ECM" le canal de transmission qui permet de véhiculer les messsages ECM pour une condition d'accès particulière.

c) La troisième est une fonction de gestion, consistant à distribuer des droits d'accès aux usagers. Il existe plusieurs moyens d'accéder à un programme, parmi lesquels on peut citer ceux qui mettent en oeuvre la norme D2MAC/P Eurocrypt : l'abonnement par thème, niveau ou classe, ainsi que l'achat à la séance, anticipé ou impulsif, au forfait ou à la durée. Ces informations sont envoyées dans des messages appelés EMM pour "Entitlement Management Message". Les messages EMM ne sont pas synchronisés avec le programme. Ils peuvent être envoyés en diffusion (c'est le cas pour la norme D2MAC/P Eurocrypt) ou suivre d'autres filières (la poste ou le réseau téléphonique par exemple).

A titre d'exemple, un programme D2MAC/P Eurocrypt est constitué de plusieurs composantes : une composante vidéo, une ou plusieurs composantes son et une ou plusieurs composantes télétext. Chacune de ces composantes peut être embrouillée avec des conditions d'accès différentes et, donc, nécessiter des messages ECM différents. Pour plus de simplicité, il est supposé par la suite que toutes les composantes du programme sont embrouillées avec les mêmes conditions d'accès et qu'il n'existe donc qu'un canal ECM pour l'ensemble du programme. Mais cette simplification ne limite en rien la portée de l'invention.

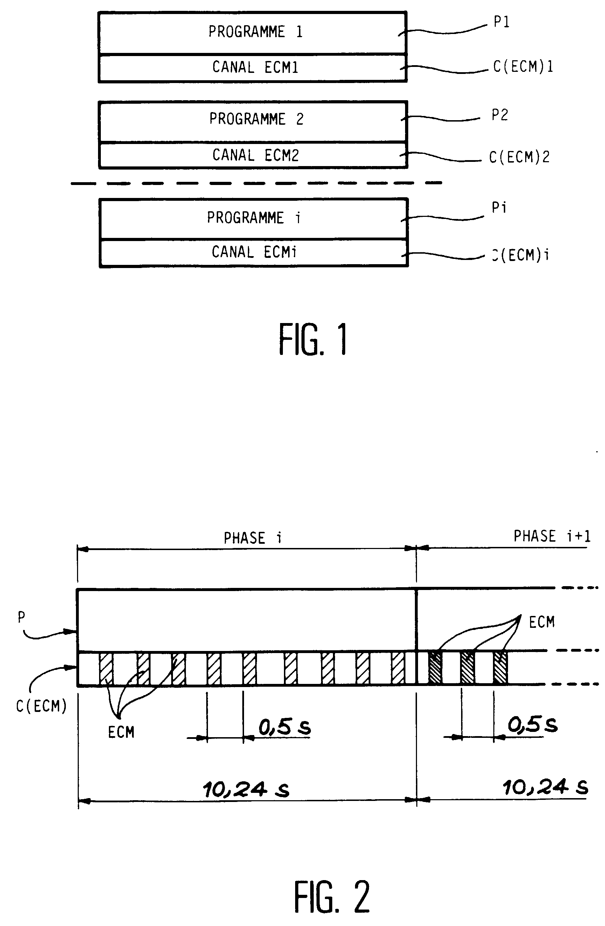

Le schéma de la figure 1 annexée représente plusieurs programmes embrouillés.

On y voit, schématiquement, un programme P1 associé à un canal C(EMC)1 chargé de véhiculer les messages ECM permettant le désembrouillage de ce programme à la réception.

La figure 1 montre encore un deuxième programme P2 avec son canal C(ECM)2 ainsi qu'un $i^{ème}$ programme Pi avec son canal C(ECM)i.

Il est classique de changer régulièrement les mots de contrôle. Par exemple, pour la norme D2MAC/P Eurocrypt, ces mots sont changés toutes les 10,24 s. La durée de vie d'un mot de contrôle est appelée phase. Il est donc nécessaire d'envoyer au moins un message ECM par phase pour transmettre aux décodeurs le nouveau mot de contrôle. En pratique, on répète les messages ECM plusieurs fois pendant une phase (2 ECM par seconde pour D2MAC/P Eurocryp) pour permettre un temps d'acquisition rapide de l'ECM pour un téléspectateur se connectant sur le programme.

La figure 2 annexée montre, pour un programme quelconque P, l'évolution du contenu du canal C(ECM) dans le temps pour une phase de rang i et pour le début de la phase suivante de rang i+1. Dans la pnase i, chaque message ECM est représenté par une bande hâchurée. En D2MAC/P Eurocrypt, le temps qui sépare deux messages ECM consécutifs est de 0,5 s (ce temps sera noté Tecm par la suite). Le débit du canal ECM est donc égal à 2 ECM par seconde pour chaque programme.

Si ce procédé donne satisfaction à certains égards, il présente néanmoins un inconvénient lorsque l'usager change de programme. En effet, la commutation de programme (opération appelée communément "zapping") se trouve être retardée par des opérations liées à l'accès conditionnel.

Pour tout système de diffusion à accès conditionnel, le temps de commutation dépend principalement des délais suivants :

- le délai d'acquisition du signal, noté Tacq,
- le délai d'acquisition de la voie de service, noté Tvoie-serv, la voie de service véhicule toutes les informations sur la structure du multiplex (position de la composante vidéo, nombre et position des composantes son, adresse du canal ECM, ...),
- le délai maximum d'attente d'un ECM, noté Tecm,
- le délai d'initialisation du PRBS (abréviation de Pseudo Random Binary System), noté Tinit-prbs.

S'il s'agit d'un signal numérique, il faut y ajouter le temps de décompression du signal, noté Tdécomp.

Parmi les délais précédemment cités, seuls Tecm, Tcalc et Tinit-prbs sont liés à l'accès conditionnel. Les autres délais existent même sans embrouillage.

Pour préciser encore cette question des délais, on prendra l'exemple d'un système fonctionnant D2MAC/P Eurocrypt. Dans ce cas, tous les délais sont cumulés : aucune action ne peut se faire avant d'avoir le résultat de l'action précédente. Les ECM sont actuellement transmis toutes les 0,5 s (Tecm=0,5 s). Le délai de traitement de l'ECM par carte comme la carte PC2 est égal à la somme du délai de sélection de la zone prestataire dans la carte (inférieur ou égal à 50 ms), du temps de calcul (en moyenne 260 ms) et du délai de lecture de résultat (inférieur ou égal à 40 ms). Il est donc de l'ordre de 350 ms. Il devrait diminuer avec la seconde version de la carte PC2 (PC2.2). Le délai d'initialisation du PRBS est négligeable (inférieur ou égal à 5 μs).

Le temps de commutation de programme est donc actuellement égal à :

$$Tacq+Tvoie\text{-}serv+Tecm+Tcalc=Tacq+Tvoie\text{-}serv+0,850 \text{ s.}$$

La présente invention a justement pour but de remédier à cet inconvénient en proposant un procédé permettant de réduire le temps de commutation en diminuant les délais Tecm et Tcalc, et en permettant de paralléliser les traitements.

**Exposé de l'invention**

Pour atteindre ce but, l'invention propose un procédé d'émission dans lequel on transmet avec chaque programme le message de contrôle propre à ce programme (qu'on appellera ECM principal noté ECMp) et cela avec une certaine fréquence (Fp) et les messages de contrôle propres aux autres programmes qu'on appellera ECM secondaires notés ECMs mais avec une fréquence (Fs) plus faible.

La présente invention a également pour objet un procédé de réception de programmes émis selon le procédé d'émission qui vient d'être défini. Selon l'invention, on utilise le message de contrôle principal (ECMp) propre au programme sélectionné pour désembrouiller celui-ci et on mémorise tous les autres messages de contrôle secondaires (ECMs) des autres programmes pour pouvoir procéder rapidement au désembrouillage de tel autre programme qui viendrait à être sélectionné.

En notant :

- D le débit du canal ECM de chaque programme (exprimé en ECM/s),
- Fp la fréquence de diffusion des ECMp principaux (en ECM/s),
- Fs la fréquence de diffusion des ECMs secondaires (en ECM/s),
- N le nombre de programmes diffusés,

alors le débit total du canal ECM de chaque programme deviendra D=Fp+Fs(N-1).

Plusieurs variantes sont possibles selon le débit d'ECM acceptable. Pour réduire ce débit, on pourra aller par exemple jusqu'à n'envoyer qu'une fois par phase un ECM secondaire.

**Brève description des figures**

- la figure 1, déjà décrite, montre la structure schématique des canaux de programmes et de messages de ECM ;
- la figure 2, déjà décrite, montre la structure d'un canal ECM ;
- la figure 3 montre un exemple de multiplexage de messages ECM selon l'invention.

**Exposé détaillé d'un mode de réalisation**

La structure des messages ECM en eux-mêmes ne sera pas décrite ici puisqu'elle ne concerne pas l'invention et est classique. On pourra toujours se reporter à ce sujet aux spécifications européennes relatives à la norme MAC/PACKET, comme par exemple au document CLC/TC 106 de janvier 1988 intitulé "Specification of the MAC/PACKET Access Control System : Protocol for ECM and EMM Messages", (29 décembre 1987).

La description qui suit porte sur trois exemples de multiplexage des différents messages ECM, à savoir les ECM principaux, propres au programme sélectionné, et les ECM secondaires, propres aux autres programmes.

Dans le premier exemple, on suppose qu'il existe 15 programmes en D2MAC/Eurocrypt. Selon l'invention, on diffuse dans les canaux ECM de chacun des programmes, les ECM de tous les programmes. Par exemple, dans le programme 1, on trouvera les ECM principaux ECM1 propres au programme 1 et les ECM secondaires ECM2, ECM3, ECM4, ..., ECM15 propres aux 14 autres programmes. Le terminal utilise les ECM principaux pour désembrouiller le programme sur lequel il est connecté, et mémorise les ECM secondaires pour les utiliser en cas de commutation.

Les ECM principaux peuvent être diffusés toutes les 0,5 s (soit une fréquence Fp=2), alors que les ECM secondaires peuvent être diffusés, par exemple, toutes les 7s (le procédé fonctionne s'ils sont diffusés au moins une fois par phase). Dans ce cas particulier, le débit D nécessaire pour transporter les ECM des 15 programmes est égal à 4 ECM par seconde.

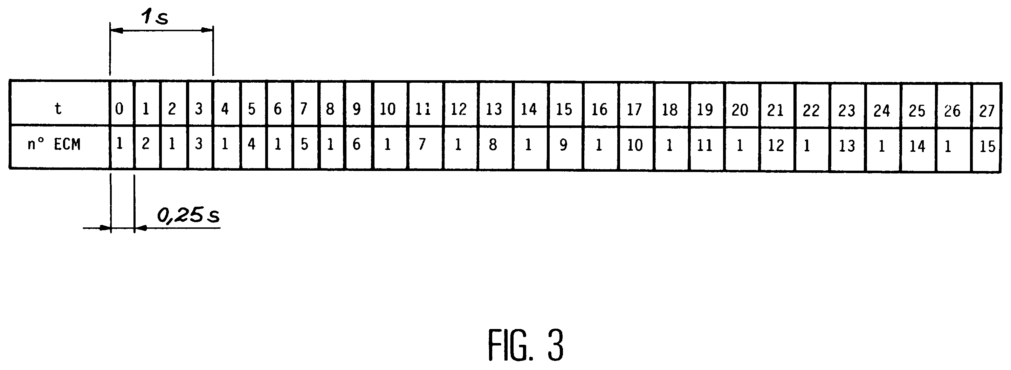

Le canal ECM de chaque programme véhicule donc, dans ce cas, 4 ECM par seconde. La figure 3 montre, par exemple, pour le programme 1, le contenu du canal ECM toutes les 0,25 s pendant les 7 premières secondes d'une phase. Le numéro de l'ECM désigne le programme auquel appartient l'ECM. Le programme principal, dans cet exemple, est le programme n° 1. Le message ECM1 dans cet exemple, est véhiculé toutes les 0,5 s.

On trouve aussi, aux différents intervalles repérés par t, les ECM suivants :

```
        -à t=0  : l'ECM    principal    propre     au
                  programme n° 1,
        -à t=1  : l'ECM    secondaire    propre     au
                  programme n° 2,
        -à t=2  : à nouveau l'ECM principal propre
                  au programme n° 1,
        -à t=3  : l'ECM    secondaire    propre     au
                  programme n° 3,
        -à t=4  : à nouveau  l'ECM principal propre
                  au programme n° 1,
        -à t=5  : etc...,
    ------------------
        -à t=26 : à nouveau l'ECM principal propre
                  au programme n° 1,
        -à t=27 : l'ECM    secondaire    propre     au
                  programme n° 15.
```

Dans cet exemple, pour tout programme déterminé, le message de contrôle propre à ce programme se trouve régulièrement répété et, entre deux messages successifs propres à ce programme, se trouvent successivement insérés tous les autres messages de contrôle ECMs propres aux autres programmes.

Dans le second exemple, on suppose que le débit des canaux ECM ne peut être augmenté. Il est possible d'envoyer les ECM secondaires en acceptant de diminuer la fréquence d'envoi Fp de l'ECM principal (le temps d'acquisition du premier ECM à la connexion se trouvant naturellement augmenté). Dans le cas où N=15 et où la fréquence Fs d'émission d'un ECM secondaire est de 1/10 (une fois par phase), on a D=2. Alors la relation précédente donne Fp=0,6. Les ECM principaux sont donc diffusés toutes les 1,66 s, au lieu de deux fois par seconde.

Lorsque le procédé d'émission qui vient d'être décrit est mis en oeuvre, le terminal n'a plus à attendre un ECM après commutation de programme puisqu'il a déjà lu et mémorisé les ECM de tous les programmes. De plus, le calcul du mot de contrôle par la carte PC2 (qui nécessite un temps Tcalc) peut se faire en parallèle avec le temps d'acquisition du signal. Le temps de commutation de programme devient égal au maximum de (Tacq + Tvoie-serv, Tcalc).

Si l'acquisition de la voie de service est rapide, la durée (Tacq+Tvoie-serv) sera vraisemblablement inférieure à Tcalc. Le temps de commutation de programme est alors égal à Tcalc = 350 ms.

Dans le troisième exemple de mise en oeuvre, tous les ECM de tous les programmes diffusés sur le réseau sont regroupés dans un canal ECM unique (canal $ECM_S$) et sont envoyés chacun à la fréquence $F_S$ (typiquement, une ou deux fois par durée de vie du mot de contrôle).

Chaque programme i véhicule par ailleurs un autre canal ECM (canal $ECM_{pi}$) contenant ses propres ECM, envoyés à la fréquence $F_p$.

Cet exemple est particulièrement adapté à la diffusion numérique de télévision, où plusieurs programmes peuvent partager le même canal de transmission.

Il est intéressant de noter pour finir que la mise en oeuvre du procédé de l'invention n'exige aucune modification de la carte PC2.

## Revendications

1. Procédé de diffusion de programmes à accès conditionnel et à temps de commutation de programmes réduit, dans lequel :

   - on embrouille les informations de divers programmes et on transmet les informations ainsi embrouillées,
   - de manière synchronisée avec chaque programme, on transmet des messages de contrôle (ECM) propres à chacun de ces programmes et cela avec une certaine fréquence (Fp),

   ce procédé étant caractérisé par le fait qu'on transmet, en outre, avec chaque programme, les messages de contrôle (ECMs) propres aux autres programmes, mais avec une fréquence (Fs) plus faible que la fréquence (Fp) propre au programme transmis.

2. Procédé selon la revendication 1, caractérisé par le fait que, pour un programme déterminé, on répète le message de contrôle propre à ce programme (ECMp) et, entre deux messages successifs propres à ce programme, on insère successivement tous les autres messages de contrôle (ECMs) propres aux autres programmes.

3. Procédé de réception de programmes émis selon l'une quelconque des revendications 1 et 2, dans lequel :

   - on reçoit les informations embrouillées de tous les programmes,
   - on sélectionne l'un de ces programmes et, pour ce programme sélectionné, on calcule, à partir du message de contrôle (ECM) propre à ce programme sélectionné, un mot de contrôle correspondant,
   - on désembrouille les informations du programme sélectionné à l'aide de ce mot de contrôle,
   - on commute éventuellement la réception pour sélectionner un autre programme,

   caractérisé par le fait qu'on mémorise en outre tous les autres messages de contrôle (ECMs) des autres programmes pour pouvoir procéder rapidement au désembrouillage de tel autre programme qui viendrait à être sélectionné.

## Patentansprüche

1. Verfahren zur Aussendung von Programmen mit bedingtem Zugang und mit verringerter Progammschaltzeit, bei dem:

   - man die Informationen bzw. Daten von mehreren Programmen verschlingt und die so verschlungenen Daten bzw. Informationen überträgt,
   - man, synchronisiert mit jedem Programm, Kontrollnachrichten (ECM) überträgt, die zu jedem dieser Programme gehören, und dies mit einer bestimmten Frequenz (Fp),

   wobei dieses Verfahren **dadurch gekennzeichnet** ist, daß man außerdem mit jedem Programm die zu den anderen Programmen gehörenden Kontrollnachrichten (ECMs) überträgt, aber mit einer Frequenz (Fs), die kleiner ist als die Eigenfrequenz (Fp) des übertragenen Programms.

**2.** Verfahren nach Anspruch 1, dadurch gekennzeichnet, daß man für ein bestimmtes Programm die zu diesem Programm gehörende Kontrollnachricht (ECMp) wiederholt und zwischen zwei aufeinanderfolgende, zu diesem Programm gehörende Nachrichten nacheinander alle anderen, zu den anderen Programmen gehörenden Kontrollnachrichten (ECMs) einfügt.

**3.** Verfahren zum Empfang von nach einem der Ansprüche 1 und 2 gesendeten Programmen, bei dem:

- man die verschlungenen Informationen bzw. Daten aller Programme empfängt,
- man eines dieser Programme auswählt und, für dieses ausgewählte Programm, aufgrund der zu diesem ausgewählten Programm gehörenden Kontrollnachricht (ECM) ein entsprechendes Kontrollwort errechnet,
- man die Informationen bzw. Daten des ausgewählten Programms mit Hilfe dieses Kontrollworts entwirrt,
- man eventuell den Empfang umschaltet, um ein anderes Programm zu wählen,

**dadurch gekennzeichnet**, daß man zudem alle die anderen Kontrollnachrichten (ECMs) der anderen Programme abspeichert, um schnell die Entwirrung des anderen, eventuell gerade ausgewählten Programms durchführen zu können.

## Claims

**1.** Process for the transmission of programmes with conditional access and reduced programme switching times, in which the informations of different programmes are scrambled and the thus scrambled informations are transmitted and in synchronized manner with each programme, transmission takes place of check messages (ECM) characteristic of each of these programmes and this takes place at a certain frequency (Fp), characterized in that with each programme transmission also takes place of the check messages (ECMs) characteristic of the other programmes, but with a lower frequency (Fs) than the frequency (Fp) characteristic of the transmitted programme.

**2.** Process according to claim 1, characterized in that, for a given programme, the check message characteristic of said programme (ECMp) is repeated and, between two successive messages characteristic of said programme, successive insertion takes place of all the other check messages (ECMs) characteristic of the other programmes.

**3.** Process for the reception of programmes transmitted according to either of the claims 1 and 2, wherein scrambled informations for all the programmes are received, one of these programmes is selected and, for said selected programme, a calculation takes place on the basis of the check message (ECM) characteristic of said selected programme, of a corresponding check word, the informations of the selected programmes are descrambled with the aid of said check word and optionally reception is switched in order to select another programme, characterized in that storage also takes place of all the other check messages (ECMs) of the other programmes in order to be able to rapidly descramble such another programme which has been selected.

FIG. 1

FIG. 2

EP 0 583 202 B1

| t | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 |
|---|---|---|---|---|---|---|---|---|---|---|----|----|----|----|----|----|----|----|----|----|----|----|----|----|----|----|----|----|
| n° ECM | 1 | 2 | 1 | 3 | 1 | 4 | 1 | 5 | 1 | 6 | 1 | 7 | 1 | 8 | 1 | 9 | 1 | 10 | 1 | 11 | 1 | 12 | 1 | 13 | 1 | 14 | 1 | 15 |

1 s

0,25 s

FIG. 3